# EUROPÄISCHE PATENTSCHRIFT

(11) **EP 3 611 051 B1**
(45) Veröffentlichungstag und Bekanntmachung des Hinweises auf die Patenterteilung: **11.11.2020**
(21) Anmeldenummer: 19187798.4
(22) Anmeldetag: 23.07.2019
(51) Int. Cl.: B60Q 1/24, B60Q 1/04

(54) **ARBEITSSCHEINWERFER UND FAHRZEUG MIT EINEM ARBEITSSCHEINWERFER**
WORKING LIGHT AND VEHICLE COMPRISING SAME
PROJECTEUR DE TRAVAIL ET VÉHICULE DOTÉ D'UN PROJECTEUR DE TRAVAIL

(30) Priorität: 31.07.2018 DE 102018118439
(43) Veröffentlichungstag der Anmeldung: 19.02.2020
(73) Patentinhaber: HELLA GmbH & Co. KGaA, 59552 Lippstadt (DE)
(72) Erfinder: GRÖNE, Stefan, 33034 Brakel (DE)

(56) Entgegenhaltungen:
- WO-A1-2014/023170
- WO-A1-2016/097367
- WO-A1-2018/038654
- DE-A1-102012 024 494

## Beschreibung

Die vorliegende Erfindung betrifft einen Arbeitsscheinwerfer und ein Fahrzeug mit einem Arbeitsscheinwerfer.

Im Stand der Technik sind verschiedene Systeme zum Beleuchten von Arbeitsbereichen bekannt. So sind Arbeitsscheinwerfer in vielen verschiedenen Designs und Ausführungsformen in verschiedenen Bereichen im Einsatz, beispielsweise an Bau-, Forst- und/oder Landwirtschaftsmaschinen, aber auch an Einsatzfahrzeugen von Hilfs- und Rettungskräften, wie beispielsweise der Feuerwehr und des Technischen Hilfswerks.

Gattungsgemäße Arbeitsscheinwerfer können an Fahrzeugen zur Ausleuchtung eines Arbeitsbereichs bei Stillstand des Fahrzeugs oder bei dessen Langsamfahrt abseits von öffentlichen Straßen zum Einsatz kommen. Hierbei können in verschiedenen Arbeitssituationen unterschiedliche Beleuchtungsszenarien erforderlich sein. Insbesondere kann es erforderlich sein, Arbeiter im Arbeitsbereich oder in der Nähe des Arbeitsbereichs auf Gefahren im Arbeitsbereich hinzuweisen. Hierzu ist es bekannt, einen Gefahrenbereich mit Bändern und/oder zusätzlichen Leuchtmitteln abzusichern. Dies stellt jedoch einen materialtechnischen und demnach auch kostentechnischen Mehraufwand dar, den es zu vermeiden gilt. Ferner ist es in manchen Geländesituationen schwierig oder gar nicht möglich die gewünschte Sicherung oder entsprechende Hinweise zu positionieren.

Ferner ist es bekannt, Arbeiter durch verschiedene Lichtsignale des Arbeitsscheinwerfers auf Gefahren im Arbeitsbereich hinzuweisen. So kann beispielsweise eine Warnleuchte am Arbeitsscheinwerfer angeordnet sein, die zumindest einen Teil des Arbeitsbereichs rot ausleuchtet, um auf eine möglich Gefahr in diesem Bereich hinzuweisen. Verschiedene Farbcodes sind jedoch nicht immer als eindeutiger Warnhinweis zu verstehen.

Ein gattungsgemäßer Arbeitsscheinwerfer ist aus WO 2016/097367 A1 bekannt.

Aufgabe der vorliegenden Erfindung ist es, der voranstehend beschriebenen Problematik zur Absicherung von Arbeitsbereichen zumindest teilweise Rechnung zu tragen. Insbesondere ist es Aufgabe der vorliegenden Erfindung, einen verbesserten Arbeitsscheinwerfer sowie ein Fahrzeug mit einem Arbeitsscheinwerfer zur Verbesserung der Arbeitssicherheit zu schaffen.

Die voranstehende Aufgabe wird durch die Patentansprüche gelöst. Insbesondere wird die voranstehende Aufgabe durch den Arbeitsscheinwerfer gemäß Anspruch 1 sowie das Fahrzeug gemäß Anspruch 9 gelöst. Weitere Vorteile der Erfindung ergeben sich aus den Unteransprüchen, der Beschreibung und den Figuren. Dabei gelten Merkmale, die im Zusammenhang mit dem Arbeitsscheinwerfer beschrieben sind, selbstverständlich auch im Zusammenhang mit dem erfindungsgemäßen Fahrzeug und jeweils umgekehrt, sodass bezüglich der Offenbarung zu den einzelnen Erfindungsaspekten stets wechselseitig Bezug genommen wird bzw. werden kann.

Gemäß einem ersten Aspekt der vorliegenden Erfindung wird ein Arbeitsscheinwerfer für ein Fahrzeug zur Verfügung gestellt. Der Arbeitsscheinwerfer weist ein Gehäuse, ein Leuchtmittel und ein Lichtleitmittel zum Leiten von durch das Leuchtmittel erzeugtem Arbeitslicht in eine vordefinierte Richtung aus dem Gehäuse heraus in einen Arbeitsbereich auf. Erfindungsgemäß ist im oder am Gehäuse ein Motiverzeugungsmittel, zur Projektion wenigstens eines Motivs auf eine Projektionsfläche außerhalb des Gehäuses, ausgestaltet. Zudem weist das Motiverzeugungsmittel eine Umschalteinheit zum Umschalten zwischen verschiedenen Motiven, die jeweils auf der Projektionsfläche außerhalb des Gehäuses projezierbar sind, auf und das Leuchtmittel ist zum Ausleuchten des Arbeitsbereichs sowie zur Erzeugung des wenigstens einen Motivs ausgestaltet.

Mit Hilfe des Motiverzeugungsmittels ist es auf einfache und kostengünstige Weise möglich, Arbeiter eindeutig über mögliche Gefahren im Arbeitsbereich hinzuweisen. So können mit Hilfe des Motiverzeugungsmittels Motive, wie ein Ausrufezeichen mit oder ohne roter Umrandung, ein Blitz oder andere Piktogramme, dargestellt werden, die von jedem Arbeiter schnell und eindeutig als Warnhinweis erkannt werden können. Unter dem Motiv kann auch ein Bild mit Schrift oder nur Schrift verstanden werden. D.h., durch das Motiverzeugungsmittel können auch konkrete Warnhinweise in den Arbeitsbereich bzw. auf die Projektionsfläche im Arbeitsbereich geschrieben bzw. entsprechend projiziert werden.

Unter dem Leuchtmittel kann eine Leuchteinheit mit wenigstens einem Leuchtelement verstanden werden. Das Lichtleitmittel weist vorzugsweise einen Reflektor auf, der das durch das Leuchtmittel erzeugte Licht bündelt und in die gewünschte Richtung aus dem Gehäuse lenkt.

Darunter, dass durch das Motiverzeugungsmittel das wenigstens eine Motiv auf die Projektionsfläche außerdem des Gehäuses projezierbar ist, kann verstanden werden, dass mit Hilfe des Motiverzeugungsmittels das wenigstens eine Motiv auf die Projektionsfläche außerhalb des Gehäuses projezierbar ist. D.h., zur Projektion des wenigstens einen Motivs auf die Projektionsfläche können das Motiverzeugungsmittel und weitere Systemkomponenten, wie das Leuchtmittel und das Lichtleitmittel, verwendet werden.

Zur Projektion des wenigstens einen Motivs kann im oder am Gehäuse eine Motivblende ausgestaltet sein, mit Hilfe von welcher das gewünschte Motiv auf die Projektionsfläche projezierbar ist. Zusätzlich oder alternativ kann eine Diaeinheit zum Positionieren eines Dias in einem Lichtweg des Lichts, das durch das Leuchtmittel erzeugt wird, ausgestaltet sein. Mit Hilfe der Motivblende und/oder der Diaeinheit kann das Licht des Leuchtmittels bzw. das Arbeitslicht genutzt werden, das auch zum Ausleuchten des Arbeitsbereichs verwendet wird. Erfindungsgemäß wird das Leuchtmittel zum Ausleuchten des Arbeitsbereichs sowie zur Erzeugung des wenigstens einen Motivs genutzt. Der Arbeitsscheinwerfer kann mithin besonders platzsparend bereitgestellt und energiesparend betrieben werden.

Unter der Projektionsfläche kann ein Bereich auf einem Untergrund oder in einem Gelände verstanden werden, auf welchem bzw. in welchem sich das Fahrzeug oder ein Arbeiter mit dem Arbeitsscheinwerfer befindet. Der Arbeitsscheinwerfer kann an einem Fahrzeug befestigt werden oder von einem Arbeiter in der Hand getragen werden. D.h., unter dem Arbeitsscheinwerfer kann ein mobiler bzw. tragbarer Arbeitsscheinwerfer verstanden werden. Hierfür kann der Arbeitsscheinwerfer einen dedizierten Handgriffabschnitt zum Halten und/oder Tragen des Arbeitsscheinwerfers durch eine Person aufweisen. Das Leuchtmittel des Arbeitsscheinwerfers weist einen maximalen Lichtstrom mit einer Lichtstärke von wenigstens 1.000 Lumen, insbesondere mit einer Lichtstärke zwischen 1.000 Lumen und 10.000 Lumen auf. Das Motiverzeugungsmittel kann eine Diaeinheit zur Projektion des wenigstens einen Motivs in Form eines Diabildes auf die Projektionsfläche aufweisen. Dies stellt eine technisch relativ einfache und kostengünstige Lösung dar. Das Motiverzeugungsmittel kann auch eine Lasereinheit zur Projektion des wenigstens einen Motivs in Form eines Laserbildes auf die Projektionsfläche aufweisen. Durch die Lasereinheit können verschiedene Motive auch bei schlechten Lichtverhältnissen klar erkennbar auf die Projektionsfläche projiziert werden.

Das wenigstens eine Motiv wird in Form eines begrenzt belichteten Bereichs auf der Projektionsfläche dargestellt und unterscheidet sich insbesondere von einfachen geometrischen Figuren, wie einer Scheibe oder einem Rechteck. Unter dem wenigstens einen Motiv kann eine Schrift und/oder ein Symbol, welche in Farbe oder Schwarz/Weiß dargestellt werden können, verstanden werden.

Unter einer Ausgestaltung des Motiverzeugungsmittels im oder am Gehäuse ist eine Positionierung des Motiverzeugungsmittels innerhalb des Gehäuses, außen am Gehäuse oder sowohl innerhalb des Gehäuses als auch außen am Gehäuse zu verstehen.

Mit der Umschalteinheit des Motiverzeugungsmittels können abhängig von der jeweiligen Arbeitssituation passende Motive in den Arbeitsbereich bzw. auf die Projektionsfläche projiziert werden. Dadurch, dass für jede Gefahrensituation ein spezifischer Warnhinweis in den Arbeitsbereich projiziert werden kann, können einer Abstumpfung gegenüber allgemeinen Hinweisen wie einem roten Licht entgegengewirkt und Arbeiter auf die tatsächlich vorliegende Gefahrensituation sensibilisiert werden. Dadurch kann die Arbeitssicherheit entsprechend erhöht werden. Bei der Verwendung einer wie vorstehend beschriebenen Diaeinheit kann die Umschalteinheit eine Dia-Tauscheinheit, ein Dia-Revolversystem oder eine Dia-Drehscheine aufweisen.

Weiterhin ist es möglich, dass der Arbeitsscheinwerfer gemäß der vorliegenden Erfindung eine Zoomeinheit für einen optischen Zoom des Motivs auf die Projektionsfläche aufweist. Durch die Zoomeinheit kann das wenigstens eine Motiv an die Größe des jeweiligen Arbeitsbereichs angepasst werden. Auch dadurch lässt sich die Sicherheit im Arbeitsbereich besonders einfach erhöhen. Die Zoomeinheit wird bevorzugt kombiniert mit einem Schärfeeinstellmittel bereitgestellt. Mit Hilfe des Schärfeeinstellmittels kann das wenigstens eine Motiv bei unterschiedlichen Zoomstufen scharf dargestellt werden, sodass etwaige Warnhinweise von Arbeitern auch klar und deutlich erkannt werden können.

Darüber hinaus kann es von Vorteil sein, wenn bei einem erfindungsgemäßen Arbeitsscheinwerfer eine Ausleuchteinheit, zum Ausleuchten eines Bereichs auf der Projektionsfläche um das wenigstens eine Motiv herum, ausgestaltet ist. Mit Hilfe der Ausleuchteinheit kann das wenigstens eine Motiv auf der Projektionsfläche bzw. auf dem Projektionsuntergrund im Arbeitsbereich für Arbeiter besser sichtbar dargestellt bzw. hervorgehoben werden, wodurch sich die Arbeitssicherheit entsprechend verbessern lässt.

Bei einer weiteren Ausgestaltungsvariante der vorliegenden Erfindung ist es möglich, dass das Leuchtmittel wenigstens eine LED aufweist. Arbeitsscheinwerfer wurden bislang überwiegend in Form von Halogenscheinwerfern ausgestaltet. LEDs zeichnen sich insbesondere durch eine lange Haltbarkeit und eine energiesparende Betriebsweise aus. Das wenigstens eine Leuchtmittel weist vorzugsweise mehrere LEDs auf.

Bei einem erfindungsgemäßen Arbeitsscheinwerfer ist es zudem möglich, dass im oder am Gehäuse eine Signalempfangseinheit zum Empfangen eines Einstellsignals zum Einstellen des Motivs angeordnet ist. Wird die Signalempfangseinheit beispielsweise mit einem Signalgeber des Fahrzeugs oder einer Smart Device gekoppelt, kann auf Knopfdruck im Fahrzeug oder auf der Smart Device das gewünschte Motiv eingestellt werden. Das wenigstens eine Motiv lässt sich mithin besonders einfach einstellen. So kann auf der Smart Device ein Vorschaubild zu jedem verfügbaren Motiv dargestellt werden. Unter der Smart Device können ein Smartphone, eine Smart Watch und ein Tablet Computer verstanden werden, wobei die vorliegende Erfindung nicht darauf beschränkt ist. So kann die Signalempfangseinheit auch mit einem Signalgeber eines anderen mobilen oder stationären Computers wie vorstehend beschrieben verbunden werden.

Von besonderem Vorteil ist es, wenn bei einem Arbeitsscheinwerfer gemäß der vorliegenden Erfindung im oder am Gehäuse ein Arbeitsscheinwerfer-Steuergerät zum automatischen Einstellen des Motivs abhängig vom empfangenen Einstellsignal ausgestaltet ist. So kann auf den Arbeitsschritt der manuellen Einstellung des gewünschten Motivs verzichtet werden. So kann das wenigstens eine Motiv beispielsweise abhängig von erkannten Umgebungsbedingungen, abhängig von welchen das Einstellsignal generiert wird, automatisch eingestellt werden. Das wenigstens eine Motiv kann durch das Arbeitsscheinwerfer-Steuergerät beispielsweise automatisch in den Arbeitsbereich projiziert werden, sobald erkannt wird, dass der Arbeitsbereich zu dunkel ist bzw. sobald ein entsprechendes Einstellsignal erstellt und an das Arbeitsscheinwerfer-Steuergerät übermittelt wurde. Das automatische Einstellen des gewünschten Motivs kann mittels eines Computerprogramms realisiert werden. Das Computerprogramm kann als computerlesbarer Anweisungscode in jeder geeigneten Programmiersprache wie beispielsweise in JAVA oder C++ implementiert sein. Das Computerprogramm kann auf einem computerlesbaren Speichermedium wie einer Datendisk, einem Wechsellaufwerk, einem flüchtigen oder nichtflüchtigen Speicher, oder einem im Arbeitsscheinwerfer eingebauten Speicher/Prozessor abgespeichert und/oder installiert sein. Der Anweisungscode kann einen Computer oder andere programmierbare Geräte wie das Steuergerät derart programmieren, dass die gewünschten Funktionen ausgeführt werden. Ferner kann das Computerprogramm in einem Netzwerk wie beispielsweise dem Internet bereitgestellt werden bzw. sein, von dem es bei Bedarf von einem Nutzer heruntergeladen werden kann. Das Computerprogramm kann sowohl mittels einer Software, als auch mittels einer oder mehrerer spezieller elektronischer Schaltungen, d.h. in Hardware in Form eines Computerprogrammprodukts, oder in beliebig hybrider Form, d.h. mittels Software-Komponenten und Hardware-Komponenten, realisiert werden bzw. sein.

Zudem kann bei einem erfindungsgemäßen Arbeitsscheinwerfer am Gehäuse ein Befestigungsabschnitt zum Befestigen des Arbeitsscheinwerfers am Fahrzeug ausgestaltet sein. Durch einen dedizierten Befestigungsabschnitt lässt sich der Arbeitsscheinwerfer leicht am Fahrzeug oder einer anderen Haltevorrichtung fixieren. Außerdem ist es möglich, dass bei einem Arbeitsscheinwerfer gemäß der vorliegenden Erfindung das Motiverzeugungsmittel zur Projektion des wenigstens einem Motivs zusammen mit dem Arbeitslicht auf eine Projektionsfläche außerhalb des Gehäuses und innerhalb des Arbeitsbereichs ausgestaltet ist. Erfindungsgemäß wird zur Projektion des wenigstens einen Motivs auf die Projektionsfläche und für das Arbeitslicht dasselbe Leuchtmittel verwendet. Das Arbeitslicht wird sozusagen zum Erstellen des wenigstens einen Motivs verwendet. Da somit kein separates Leuchtmittel zum Erstellen des wenigstens einen Motivs erforderlich ist, kann der Arbeitsscheinwerfer energiesparend betrieben und kompakt bereitgestellt werden. Zur Projektion des wenigstens einem Motivs zusammen mit dem Arbeitslicht auf eine Projektionsfläche außerhalb des Gehäuses und innerhalb des Arbeitsbereichs kann ein Dia oder eine entsprechende Maskierungsblende im Lichtweg des Leuchtmittels vom Leuchtmittel Richtung Arbeitsbereich positioniert sein bzw. werden.

Gemäß einem weiteren Aspekt der vorliegenden Erfindung wird ein Fahrzeug mit einem wie vorstehend beschriebenen Arbeitsscheinwerfer zur Verfügung gestellt. Damit bringt das erfindungsgemäße Fahrzeug die gleichen Vorteile mit sich, wie sie ausführlich mit Bezug auf den erfindungsgemäßen Arbeitsscheinwerfer beschrieben worden sind. Das Fahrzeug ist vorzugsweise in Form eines Kraftfahrzeugs, insbesondere in Form eines Arbeitsfahrzeugs, ausgestaltet.

Weitere, die Erfindung verbessernde Maßnahmen ergeben sich aus der nachfolgenden Beschreibung zu verschiedenen Ausführungsbeispielen der Erfindung, welche in den Figuren schematisch dargestellt sind. Anhand der beigefügten Figuren wird die Erfindung nachfolgend näher erläutert.

### Dabei zeigen

- Fig. 1: eine Vorderansicht eines Arbeitsscheinwerfers gemäß einer Ausführungsform der vorliegenden Erfindung,
- Fig. 2: eine Seitenansicht des in Fig. 1 dargestellten Arbeitsscheinwerfers,
- Fig. 3: einen ein Motiv darstellenden Arbeitsscheinwerfer gemäß einer Ausführungsform der vorliegenden Erfindung, und

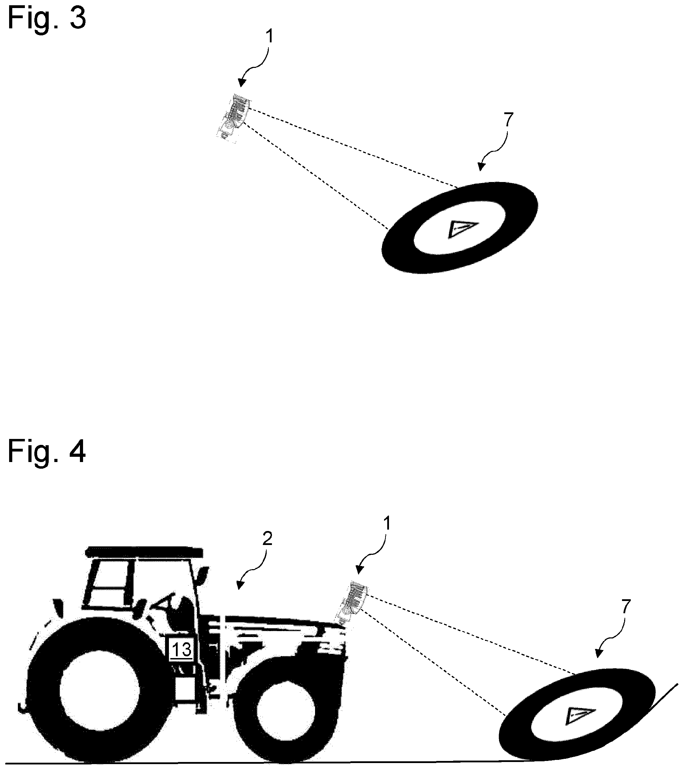

- Fig. 3: ein Fahrzeug mit einem Arbeitsscheinwerfer gemäß einer Ausführungsform der vorliegenden Erfindung.

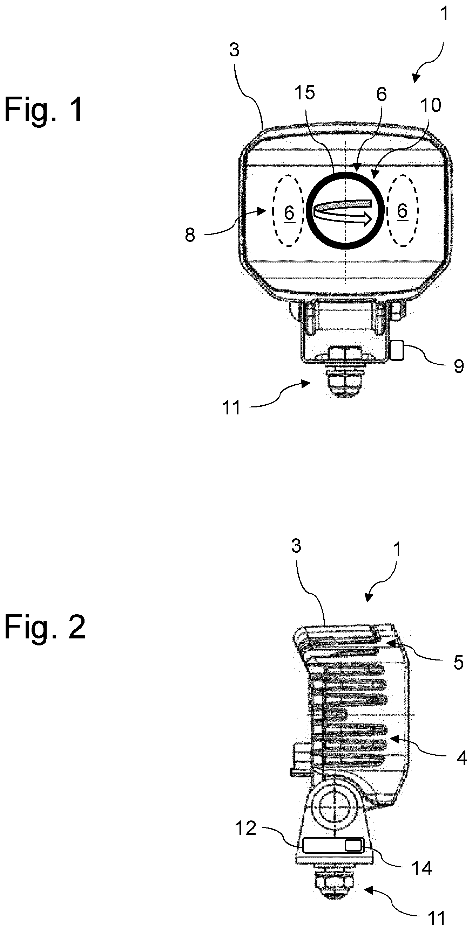

Elemente mit gleicher Funktion und Wirkungsweise sind in den Figuren 1 bis 4 jeweils mit denselben Bezugszeichen versehen.

Fig. 1 zeigt einen Arbeitsscheinwerfer 1 für ein Fahrzeug 2 mit einem Gehäuse 3, einem Leuchtmittel 4 mit mehreren LEDs und einem Lichtleitmittel 5 (s. Fig. 2) zum Leiten von durch das Leuchtmittel 4 erzeugtem Arbeitslicht in eine vordefinierte Richtung aus dem Gehäuse 3 heraus in einen Arbeitsbereich. Innerhalb des Gehäuses 3 ist ein Motiverzeugungsmittel 6, zur Projektion eines Motivs 7 (s. Fig. 3) auf eine Projektionsfläche außerhalb des Gehäuses 3, ausgestaltet.

Das Motiverzeugungsmittel 6 weist eine Umschalteinheit 8 zum Umschalten zwischen verschiedenen Motiven 7, die jeweils auf der Projektionsfläche außerhalb des Gehäuses 3 projezierbar sind, auf. Die dargestellte Umschalteinheit 8 ist in Form eines Revolversystems ausgestaltet, durch welches verschiedene Dias in den Lichtweg des Arbeitsscheinwerfers 1 positioniert werden können. Der Arbeitsscheinwerfer 1 weist ferner eine Zoomeinheit 15 für einen optischen Zoom des Motivs 7 auf die Projektionsfläche auf. Der Zoomfaktor der Zoomeinheit 15 kann durch Drehen an einem Zoomring der Zoomeinheit 15 verstellt werden, wobei verschiedene optische Elemente der Zoomeinheit 15 relativ zueinander bewegt werden.

Gemäß der in Fig. 1 dargestellten Ausführungsform ist im Gehäuse 3 eine Ausleuchteinheit 10, zum Ausleuchten eines Bereichs auf der Projektionsfläche um das Motiv 7 herum, ausgestaltet. Die Ausleuchteinheit 10 umfasst im vorliegenden Beispiel das Leuchtmittel 4. D.h., das Leuchtmittel 4 erzeugt das Arbeitslicht, mit welchem das Motiv 7 ausgeleuchtet werden kann. Demnach ist auch das gezeigte Motiverzeugungsmittel 6 zur Projektion des Motivs 7 zusammen mit dem Arbeitslicht auf eine Projektionsfläche außerhalb des Gehäuses 3 und innerhalb des Arbeitsbereichs ausgestaltet.

Wie in Fig. 1 dargestellt, ist am Gehäuse 3 eine Signalempfangseinheit 9 zum Empfangen eines Einstellsignals zum Einstellen des Motivs 7 angeordnet. Die Signalempfangseinheit ist vorliegend zum Empfangen von Funksignalen eines externen Computers, beispielsweise in Form bzw. als Bestandteil eines Smartphones, ausgestaltet, sodass der Arbeitsscheinwerfer 1 durch das Smartphone angesteuert werden kann. Am Gehäuse 3 ist hierzu ein Arbeitsscheinwerfer-Steuergerät 12 zum automatischen Einstellen des Motivs 7 abhängig vom empfangenen Einstellsignal ausgestaltet. D.h., wird auf dem Smartphone beispielsweise ein Motiv mit einem Warndreieck und einem darin befindlichen Ausrufezeichen ausgewählt, wird dieses mit Hilfe des Arbeitsscheinwerfer-Steuergeräts 12 automatisch erstellt und entsprechend in den Arbeitsbereich projiziert.

Der in Fig. 1 dargestellte Arbeitsscheinwerfer weist am Gehäuse einen Befestigungsabschnitt 11 auf, um den Arbeitsscheinwerfer 1 am Fahrzeug 2 zu befestigen bzw. mit dem Fahrzeug 2 zu verschrauben.

Fig. 2 zeigt eine Seitenansicht des in Fig. 1 dargestellten Arbeitsscheinwerfers 1, in welchem insbesondere das Lichtleitmittel 5 in Form eines Reflektors im Gehäuse 3 dargestellt ist. Ferner ist in Fig. 2 das Arbeitsscheinwerfer-Steuergerät 12 dargestellt, in welchem ein Computerprogramm 14 zum Ausführen der Funktionen des Arbeitsscheinwerfer-Steuergeräts 12 installiert ist.

Fig. 3 zeigt den in Fig. 1 und Fig. 2 dargestellten Arbeitsscheinwerfer 1 in einem Betriebszustand, in welchem ein Motiv 7 mit einem Warndreieck und einem darin befindlichen Ausrufezeichen auf eine Projektionsfläche in einen Arbeitsbereich projiziert wird, wobei mittels der Ausleuchteinheit 10 ein Bereich auf der Projektionsfläche um das Motiv 7 herum ausgeleuchtet wird.

In Fig. 4 ist ein Fahrzeug 2 in Form eines Traktors mit einem an dessen Motorhaube installierten Arbeitsscheinwerfer 1 dargestellt, der ein Motiv 7 bzw. ein Logo auf einen Untergrund in einem Arbeitsbereich projiziert. Das Fahrzeug 2 weist ein Fahrzeug-Steuergerät 13 auf, mit Hilfe von welchem der Arbeitsscheinwerfer 1 angesteuert werden kann. Das Fahrzeug-Steuergerät 13 kann mit Bedienelementen in einer Fahrzeugkabine des Fahrzeugs 2 in Signalverbindung stehen, sodass ein Arbeiter den Arbeitsscheinwerfer 1 durch Betätigung der Bedienelemente ansteuern kann. Die Signalverbindung zwischen Fahrzeug 2 und Arbeitsscheinwerfer 1 kann drahtlos oder drahtgebunden realisiert sein.

Die Erfindung lässt neben den dargestellten Ausführungsformen weitere Gestaltungsgrundsätze zu. D.h., die Erfindung soll nicht auf die mit Bezug auf die Figuren erläuterten Ausführungsbeispiele beschränkt betrachtet werden. So kann zusätzlich zur Zoomeinheit 15 ein Schärfeeinstellmittel im oder am Arbeitsscheinwerfer 1 zum Schärfen eines gezoomten Motivs 7 ausgestaltet sein. Ferner kann der Arbeitsscheinwerfer 1 einen gesonderten Handgriffabschnitt aufweisen, mit welchem er von einer Person gehalten und/oder getragen werden kann.

### Bezugszeichenliste

- 1: Arbeitsscheinwerfer
- 2: Fahrzeug
- 3: Gehäuse
- 4: Leuchtmittel
- 5: Lichtleitmittel
- 6: Motiverzeugungsmittel
- 7: Motiv
- 8: Umschalteinheit
- 9: Signalempfangseinheit
- 10: Ausleuchteinheit
- 11: Befestigungsabschnitt
- 12: Arbeitsscheinwerfer-Steuergerät
- 13: Fahrzeug-Steuergerät
- 14: Computerprogramm
- 15: Zoomeinheit

## Patentansprüche

1. Arbeitsscheinwerfer (1) für ein Fahrzeug (2), aufweisend ein Gehäuse (3), ein Leuchtmittel (4) und ein Lichtleitmittel (5) zum Leiten von durch das Leuchtmittel (4) erzeugtem Arbeitslicht in eine vordefinierte Richtung aus dem Gehäuse (3) heraus in einen Arbeitsbereich,
wobei im und/oder am Gehäuse (3) ein Motiverzeugungsmittel (6), zur Projektion wenigstens eines Motivs (7) auf eine Projektionsfläche außerhalb des Gehäuses (3), ausgestaltet ist,
**dadurch gekennzeichnet, dass**
das Motiverzeugungsmittel (6) eine Umschalteinheit (8) zum Umschalten zwischen verschiedenen Motiven (7), die jeweils auf der Projektionsfläche außerhalb des Gehäuses (3) projezierbar sind, aufweist und das Leuchtmittel zum Ausleuchten des Arbeitsbereichs sowie zur Erzeugung des wenigstens einen Motivs ausgestaltet ist.

2. Arbeitsscheinwerfer (1) nach einem der voranstehenden Ansprüche,
**dadurch gekennzeichnet, dass**
der Arbeitsscheinwerfer eine Zoomeinheit (15) für einen optischen Zoom des Motivs (7) auf die Projektionsfläche aufweist.

3. Arbeitsscheinwerfer (1) nach einem der voranstehenden Ansprüche,
**dadurch gekennzeichnet, dass**
im und/oder am Gehäuse (3) eine Ausleuchteinheit (10), zum Ausleuchten eines Bereichs auf der Projektionsfläche um das wenigstens eine Motiv (7) herum, ausgestaltet ist.

4. Arbeitsscheinwerfer (1) nach einem der voranstehenden Ansprüche,
**dadurch gekennzeichnet, dass**
das Leuchtmittel (4) wenigstens eine LED aufweist.

5. Arbeitsscheinwerfer (1) nach einem der voranstehenden Ansprüche,
**dadurch gekennzeichnet, dass**
im oder am Gehäuse (3) eine Signalempfangseinheit (9) zum Empfangen eines Einstellsignals zum Einstellen des Motivs (7) angeordnet ist.

6. Arbeitsscheinwerfer (1) nach Anspruch 5,
**dadurch gekennzeichnet, dass**
im oder am Gehäuse (3) ein Arbeitsscheinwerfer-Steuergerät (12) zum automatischen Einstellen des Motivs (7) abhängig vom empfangenen Einstellsignal ausgestaltet ist.

7. Arbeitsscheinwerfer (1) nach einem der voranstehenden Ansprüche,
**dadurch gekennzeichnet, dass**
am Gehäuse (3) ein Befestigungsabschnitt (11) zum Befestigen des Arbeitsscheinwerfers (1) am Fahrzeug (2) ausgestaltet ist.

8. Arbeitsscheinwerfer (1) nach einem der voranstehenden Ansprüche,
**dadurch gekennzeichnet, dass**
das Motiverzeugungsmittel (6) zur Projektion des wenigstens einem Motivs (7) zusammen mit dem Arbeitslicht auf eine Projektionsfläche außerhalb des Gehäuses (3) und innerhalb des Arbeitsbereichs ausgestaltet ist.

9. Fahrzeug (2) mit einem Arbeitsscheinwerfer (1) nach einem der voranstehenden Ansprüche.

## Claims

1. Working spotlight (1) for a vehicle (2) featuring a housing (3), a light source (4) and a light guide system (5) for guiding working light generated by the light source (4) in a predefined direction out of the housing (3) into a working area,
where a means of generating a motif (6) is arranged in and/or on the housing (3) for projecting at least one motif (7) onto a projection surface outside of the housing (3),
**characterized in that**
the means of generating a motif (6) features a switching unit (8) for switching between different motifs (7) that can each be projected onto the projection surface outside of the housing (3) and the light source is designed to illuminate the working area and to generate the at least one motif.

2. Working spotlight (1) in accordance with one of the above Claims,
**characterized in that**
the working spotlight features a zoom unit (15) to achieve optical zooming of the motif (7) onto the projection surface.

3. Working spotlight (1) in accordance with one of the above Claims,
**characterized in that**
a floodlight unit (10) is arranged in and/or on the housing (3) for floodlighting an area on the projection surface around the at least one motif (7).

4. Working spotlight (1) in accordance with one of the above Claims,
**characterized in that**
the light source (4) features at least one LED.

5. Working spotlight (1) in accordance with one of the above Claims,
**characterized in that**
a signal reception unit (9) is arranged in or on the housing (3) for receiving a setting signal for setting the motif (7).

6. Working spotlight (1) in accordance with Claim 5,
**characterized in that**
a working spotlight control unit (12) is arranged in or on the housing (3) for automatically setting the motif (7) depending on the setting signal received.

7. Working spotlight (1) in accordance with one of the above Claims,
**characterized in that**
a mounting section (11) is arranged on the housing (3) for mounting the working spotlight (1) on the vehicle (2).

8. Working spotlight (1) in accordance with one of the above Claims,
**characterized in that**
the means of generating a motif (6) is designed for projecting the at least one motif (7), together with the working light, onto a projection surface outside of the housing 3 and within the working area.

9. Vehicle (2) with a working spotlight (1) in accordance with one of the above Claims.

## Revendications

1. Lampe de travail (1) pour un véhicule (2), comprenant un boîtier (3), une ampoule (4) et un guide de lumière (5) pour guider la lumière de travail générée par l'ampoule (4) dans une direction prédéfinie hors du boîtier (3) sur une zone de travail,
un dispositif de génération de motif (6) étant prévu dans et/ou sur le boîtier (3) pour projeter au moins un motif (7) sur une surface de projection à l'extérieur du boîtier (3),
**caractérisée en ce que**
le dispositif de génération de motif (6) comporte une unité de commutation (8) pour commuter entre différents motifs (7), chacun pouvant être projeté sur la surface de projection hors du boîtier (3), et que l'ampoule est conçue pour éclairer la zone de travail et pour générer au moins un motif.

2. Lampe de travail (1) selon l'une des revendications ci-dessus,
**caractérisée en ce que**
la lampe de travail comprend une unité de zoom (15) pour un zoom optique du motif (7) sur la surface de projection.

3. Lampe de travail (1) selon l'une des revendications ci-dessus,
**caractérisée en ce que**
une unité d'éclairage (10) est prévue dans et/ou sur le boîtier (3) pour éclairer une zone sur la surface de projection qui entoure au moins un motif (7).

4. Lampe de travail (1) selon l'une des revendications ci-dessus,
**caractérisée en ce que**
l'ampoule (4) comporte au moins une LED.

5. Lampe de travail (1) selon l'une des revendications ci-dessus,
**caractérisée en ce que**
une unité de réception de signal (9) pour la réception d'un signal de réglage pour le réglage du motif (7) est montée dans ou sur le boîtier (3).

6. Lampe de travail (1) selon la revendication 5,
**caractérisée en ce que**
une unité de commande de lampe de travail (12) est prévue dans ou sur le boîtier (3) pour le réglage automatique du motif (7) en fonction du signal de réglage reçu.

7. Lampe de travail (1) selon l'une des revendications ci-dessus,
**caractérisée en ce que**
une section de fixation (11) est prévue sur le boîtier (3) pour fixer la lampe de travail (1 ) sur le véhicule (2).

8. Lampe de travail (1) selon l'une des revendications ci-dessus,
**caractérisée en ce que**
le dispositif de génération de motif (6) est adapté pour projeter au moins un motif (7) avec la lumière de travail sur une surface de projection hors du boîtier (3) et dans la zone de travail.

9. Un véhicule (2) avec une lampe de travail (1) selon l'une des revendications ci-dessus.
